Europäisches Patentamt

European Patent Office

Office européen des brevets

(11) Veröffentlichungsnummer: **0 203 444**
**B1**

(12) **EUROPÄISCHE PATENTSCHRIFT**

(45) Veröffentlichungstag der Patentschrift:
09.08.89

(21) Anmeldenummer: 86106483.0

(22) Anmeldetag: **13.05.86**

(51) Int. Cl.⁴: **H02M 3/335**

(54) **Primärgetaktetes Schaltnetzteil.**

(30) Priorität: **23.05.85 DE 3518594**

(43) Veröffentlichungstag der Anmeldung:
**03.12.86 Patentblatt 86/49**

(45) Bekanntmachung des Hinweises auf die Patenterteilung:
**09.08.89 Patentblatt 89/32**

(84) Benannte Vertragsstaaten:
**AT CH DE FR GB IT LI**

(56) Entgegenhaltungen:
**EP-A- 0 105 541**
**DE-A- 2 845 163**

(73) Patentinhaber: **Siemens Aktiengesellschaft Berlin und München, Wittelsbacherplatz 2, D-8000 München 2(DE)**

(72) Erfinder: **Segger, Bernd, Isarstrasse 4, D-8520 Erlangen(DE)**

ACTORUM AG

**Beschreibung**

Die Erfindung bezieht sich auf ein primärgetaktetes Schaltnetzteil mit einer primärseitigen Hilfsspannungsversorgung für eine Steuereinheit eines primären der Primärwicklung nachgeschalteten Leistungsschalters, mit einem primärseitigen Spannungsregler und mit einem weiteren primären Regler, wobei die Hilfsspannungsversorgung eine mitlaufende Wicklung enthält, der eine Reihenschaltung aus einer Diode und einem Kondensator elektrisch parallelgeschaltet ist.

Im Handel ist ein primärgetaktetes Schaltnetzteil erhältlich, dessen Ausgang nicht mit besonderen Bauteilen abgesichert ist. Ein derartiges primärgetaktetes Schaltnetzteil ist nur gegen Kurzschlüsse abgesichert, da im Kurzschlußfall durch die magnetische Kopplung auch die mitlaufende Wicklung der Hilfsspannungsversorgung der Steuereinheit kurzgeschlossen ist. Dadurch wird im Kurzschlußfall nach einer vorbestimmten Zeit die Steuereinheit ausgeschaltet. Beim Auftreten eines Überstromes bleibt die Hilfsspannungsversorgung und damit die Steuereinheit durch die magnetische Kopplung der mitlaufenden Wicklung mit dem Sekundärkreis eingeschalten, so daß primärseitig das Tastverhältnis erhöht wid, anstelle einer Verminderung oder Abschaltung des Tastverhältnisses.

Aus der DE-A 2 845 163 ist eine Spannungs-Stabilisierschaltung für ein Stromversorgungsgerät bekannt, dessen Transformator eine Hilfswicklung zur Erzeugung einer der durch die Sekundärwicklung des Transformators abgegebenen Spannung proportionalen Spannung enthält, die einer Oszillatorschaltung zu deren Ansteuerung zugeführt wird. Die Oszillatorschaltung steuert eine primärseitige Schalteinrichtung. Außerdem ist an der Hilfswicklung eine Meldeschaltung angeschlossen, die eine Überspannungs- und Überstromprüfschaltung enthält, womit ein Steuersignal erzeugt wird, wenn an der Hilfswicklung eine Überspannung und/oder ein Überstrom an der Primärwicklung auftritt.

Der Erfindung liegt nun die Aufgabe zugrunde, ein primärgetaktetes Schaltnetzteil mit einer primärseitigen Hilfsspannungsversorgung der eingangs genannten Art so auszubilden, dass mit einfachen Mitteln ein Überspannungs- und/oder Überstromschutz möglich ist.

Diese Aufgabe wird erfindungsgemäß gelöst mit den kennzeichnenden Merkmalen des Anspruchs 1.

Bei dem erfindungsgemäßen primärgetakteten Schaltnetzteil mit einer primärseitigen Hilfsspannungsversorgung wird der Strombegrenzungsschalter leitend, sobald der weitere primäre Regler angesteuert wird. Dadurch wird der Takteingang der Steuereinheit für den primären Leistungsschalter mit dem Massepotential verbunden und der Strombegrenzungsschalter eingeschaltet. Der Strombegrenzungsschalter bleibt so lange eingeschaltet, bis die Kondensatorspannung der Hilfsspannungsversorgung unterhalb einer vorbestimmten Schwellspannung abgesunken ist, d. h. der Kondensator und die mitlaufende Wicklung der Hilfsspannungsversorgung werden mittels des Strombegrenzungsschalters kurzgeschlossen. Unterhalb dieser Schwellspannung öffnet der Strombegrenzungsschalter und die Steuereinheit des primären Leistungsschalters schaltet sich wieder ein. Wenn in der Zwischenzeit die Ursache des Überstromes nicht beseitigt wurde, so wird der Strombegrenzungsschalter mittels des weiteren primären Reglers eingeschaltet. Somit erhält man mit einfachen Mitteln ein primärgetaktetes Schaltnetzteil mit einer getakteten Überstrombegrenzung.

Als einfachen Strombegrenzungsschalter ist ein pnp- und npn-Transistor vorgesehen, deren Kollektoren jeweils über einen Kollektorwiderstand mit der Basis des jeweils anderen Transistors verbunden sind. Außerdem ist jeweils ein Basis-Emitter-Widerstand vorgesehen. Der Emitter des pnp-Transistors ist mit dem Hilfsspannungseingang der Steuereinheit und der Emitter des npn-Transistors ist mit dem Massepotential verbunden. Sobald der weitere primäre Regler angesteuert wird, stellt sich an der Basis des pnp-Transistors mit Hilfe des Spannungsteilers eine Basisspannung ein, so daß der pnp-Transistor leitend wird. Somit stellt sich auch an der Basis des npn-Transistors eine Spannung ein, die diesen Transistor in den leitenden Zustand bringt. Selbst wenn der weitere primäre Regler nicht mehr angesteuert wird, bleibt dieser aufgebaute Strombegrenzungsschalter so lange eingeschaltet, bis die Kondensatorspannung des Kondensators der Hilfsspannungsversorgung eine Schwellspannung unterschritten hat. Somit erhält man ein primärgetaktetes Schaltnetzteil, wobei im Störungsfall die Werte eines Überstromes oder einer Überspannung infolge der Taktung des Strombegrenzungsschalters wesentlich verringert werden.

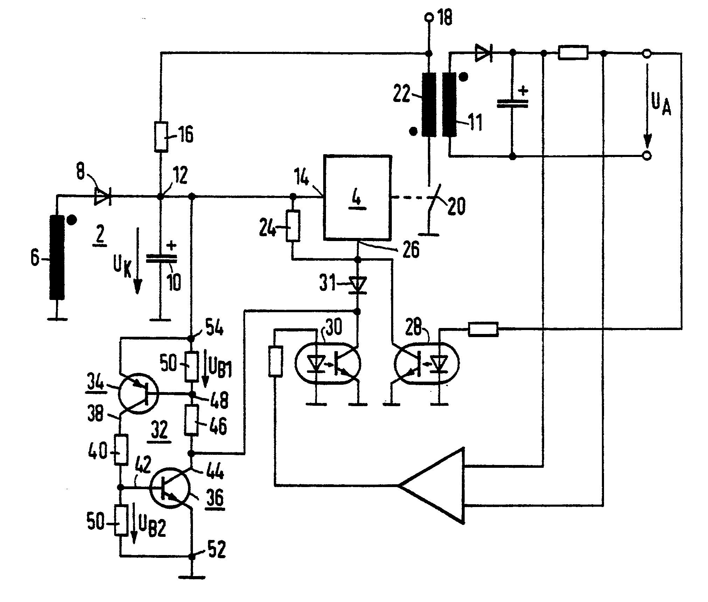

Zur weiteren Erläuterung der Erfindung wird auf die Zeichnung Bezug genommen, in der ein Ausführungsbeispiel des primärgetakteten Schaltnetzteils mit einer primärseitigen Hilfsspannungsversorgung nach der Erfindung schematisch veranschaulicht ist.

In der dargestellten Ausführungsform ist ein primärgetaktetes Schaltnetzteil mit einer primärseitigen Hilfsspannungsversorgung 2 für eine Steuereinheit 4 dargestellt. Die Hilfsspannungsversorgung 2 enthält eine mitlaufende Wicklung 6, eine Diode 8 und einen Kondensator 10. Die mitlaufende Wicklung 6 ist magnetisch mit einer Sekundärwicklung 11 des Wandlers des Schaltnetzteils verbunden. Ferner ist die Reihenschaltung aus der Diode 8 und dem Kondensator 10 elektrisch parallel zur mitlaufenden Wicklung 6 geschaltet. Der Verbindungspunkt 12 von der Diode 8 und dem Kondensator 10 ist mit dem Hilfsspannungseingang 14 der Steuereinheit 4 verbunden. Außerdem ist der Verbindungspunkt 12 über einen Anlaufwiderstand 16 mit der positiven primären Eingangsklemme 18 verbunden. Der Ausgang dieser Steuereinheit 4 wirkt auf einen primären Leistungsschalter 20, der einer Primärwicklung 22 des Wandlers des Schaltnetzteils nachgeschaltet ist. Außerdem ist der Hilfsspannungseingang 14 der Steuereinheit 4 über einen Widerstand 24 mit dem Takteingang 26 der Steuereinheit 4 verbunden. Ferner ist ein primärseitiger Spannungsregler 28 und ein weiterer primärer Regler 30 mit dem Takteingang 26 verbunden, wobei die beiden Regler 28 und 30 mittels einer Entkopplungsdiode 31 derart elektrisch zusammengeschaltet sind, daß der primäre Spannungsregler 28 keine Wirkung auf den weiteren primären Regler 30 bzw. dem Betätigungseingang eines Strombegrenzungsschalters 32 hat. Als primäre Regler 28 und 30 sind Optokoppler vorgesehen, die im unbeleuchteten Zustand das Tastverhältnis voll aufsteuern. Als Strombegrenzungsschalter 32 ist ein pnp- und npn-Transistor 34 und 36 vorgesehen. Der Kollektor 38 des pnp-Transistors 34 ist über einen Widerstand 40 mit der Basis 42 des npn-Transistors 36 verbunden, dessen Kollektor 44 ebenfalls über einen Kollektorwiderstand 46 mit der Basis 48 des pnp-Transistors 34 verbunden ist. Außerdem ist jeweils ein Basis-Emitter-Widerstand 50 vorgesehen. Der Emitter 52 des npn-Transistors 36 ist mit dem Massepotential und der Emitter 54 des pnp-Transistors 34 ist mit dem Verbindungspunkt 12 der Diode 8 und dem Kondensator 10 verbunden. Der Kollektor 44 des npn-Transistors 36 ist außerdem mit dem Ausgang des weiteren primären Reglers 30 verbunden, wobei der Kollektor 44 gleichzeitig als Betätigungseingang des Strombegrenzungsschalters 32 vorgesehen ist. Der Basis-Emitter-Widerstand 50 und der Kollektorwiderstand 46 bzw. der Basis-Emitter-Widerstand 50 und der Kollektorwiderstand 40 bilden jeweils einen Spannungsteiler, dessen Widerstandswerte in Abhängigkeit der Kondensatorspannung $U_K$ des Kondensators 10 und der Basisspannungen $U_{B1}$ und $U_{B2}$ der Transistoren 34 und 36 bestimmt werden. Bei einer Kondensatorspannung $U_K$ von etwa 10 V ist das Widerstandsverhältnis von Basis-Emitter-Widerstand 50 zum Kollektorwiderstand 46 bzw. 40 etwa 1 : 9.

Im eingeschwungenen Betriebszustand wird die Ausgangsspannung $U_A$ des primärgetakteten Schaltnetzteils mittels des primären Spannungsreglers 28, der Steuereinheit 4 und des primären Leistungsschalters 20 konstant gehalten. Dabei wird über den Spannungsregler 28 ein Tastverhältnis der Steuereinheit 4 eingestellt, die ihrerseits von der Hilfsspannungsversorgung 2 im eingeschalteten Zustand gehalten wird.

Beim Auftreten eines Überstromes auf der Sekundärseite des primärgetakteten Schaltnetzteils wird dieser mit Hilfe eines nicht näher bezeichneten Komparators erkannt und über den als primärer Regler 30 verwendeten Optokoppler auf die Primärseite des Schaltnetzteils gemeldet. Damit wird das Potential des Tasteingangs 26 der Steuereinheit 4 soweit abgesenkt, daß die Schwellspannung des Tasteingangs 26 unterschritten wird. Dadurch wird das Tastverhältnis für den Leistungsschalter 20 unmittelbar zu Null und der Wandler des Schaltnetzteils wird gesperrt. Folglich wird auch die Energiezufuhr der Hilfsspannungsversorgung 2 über die mitlaufende Wicklung 6 unterbunden. Ferner wird der Betätigungseingang des Strombegrenzungsschalters 32 annähernd auf Null Volt gelegt. Dadurch fällt am Spannungsteiler, bestehend aus dem Kollektorwiderstand 46 und dem Basis-Emitter-Widerstand 50, die Kondensatorspannung $U_K$ ab, wodurch am Basis-Emitter-Widerstand 50 eine Teilspannung $U_{B1}$ abfällt, die den pnp-Transistor 34 leitend schaltet. Dadurch fällt auch am Spannungsteiler, bestehend aus dem Kollektorwiderstand 40 und dem Basis-Emitter-Widerstand 50, die Kondensatorspannung $U_K$ ab. Auch an diesem Basis-Emitter-Widerstand 50 fällt eine Teilspannung $U_{B2}$ ab, die den npn-Transistor 36 leitend schaltet. Dadurch ist die mitlaufende Wicklung 6 und der Kondensator 10 kurzgeschlossen, wodurch die in ihnen gespeicherte Energie gegen Masse abgeführt wird. Der Strombegrenzungsschalter 32 bleibt so lange eingeschaltet, bis die Kondensatorspannung $U_K$, insbesondere die Teilspannungen $U_{B1}$ und $U_{B2}$, unterhalb einer vorbestimmten Schwellspannung gesunken sind. Wenn der Strombegrenzungsschalter dann wieder öffnet, wird mit Hilfe des Anlaufwiderstandes 16 eine Hilfsspannung am Hilfsspannungseingang 14 der Steuereinheit 4 aufgebaut. Wenn der Überstrom im Sekundärkreis nicht mehr vorhanden ist, gelangt dieses Schaltnetzteil wieder in seinen eingeschwungenen Betriebszustand ohne Hilfe von außen, sobald am Hilfsspannungseingang 14 der Steuereinheit 4 ein vorbestimmter Wert einer Hilfsspannung anliegt. Ist jedoch im Sekundärkreis des primärgetakteten Schaltnetzteils immer noch ein Überstrom vorhanden, so spricht der weitere primäre Regler 30 wieder an, wodurch das Tastverhältnis des primären Leistungsschalters 20 ausgeschalten und der Strombegrenzungsschalter 32 eingeschalten werden. Durch das Ein- und Ausschalten des Strombegrenzungsschalters 32 wird der Wert des Überstromes oder auch eines Kurzschlußstromes wenigstens auf den Wert des Nennstromes abgesenkt. Somit erhält man mit einfachen Mitteln ein primärgetaktetes Schaltnetzteil mit einer getakteten Strombegrenzung.

## Patentansprüche

1. Primärgetaktetes Schaltnetzteil mit einer primärseitigen Hilfsspannungsversorgung (2) für eine Steuereinheit (4) eines primären der Primärwicklung nachgeschalteten Leistungsschalters (20), mit einem primärseitigen Spannungsregler (28) und mit einem weiteren primären Regler (30), wobei die Hilfsspannungsversorgung (2) eine mitlaufende Wicklung (6) enthält, der eine Reihenschaltung aus einer Diode (8) und einem Kondensator (10) elektrisch parallelgeschaltet ist, dadurch gekennzeichnet, daß ein Strombegrenzungsschalter (32) zwischen den Hilfsspannungseingang (14) der Steuereinheit (4) und das Massepotential geschaltet ist, dessen Betätigungseingang mit einem Ausgang des primären Reglers verbunden ist.

2. Primärgetaktetes Schaltnetzteil nach Anspruch 1, dadurch gekennzeichnet, daß als Strombegrenzungsschalter (32) ein pnp- und npn-Transistor (34, 36) vorgesehen ist, deren Kollektoren (38, 44) jeweils über einen Kollektorwiderstand (40, 46) mit der Basis (42, 48) des jeweils anderen Transistors (36, 32) verbunden sind und jeweils ein Basis-Emitter-Widerstand (50) vorgesehen ist.

3. Primärgetaktetes Schaltnetzteil nach Anspruch 1 oder 2, **dadurch gekennzeichnet,** daß der Hilfsspannungseingang (14) der Steuereinheit (4) mit dem Emitter (54) des pnp-Transistors (34) und das Massepotential mit dem Emitter (52) des npn-Transistors (36) verbunden sind.

4. Primärgetaktetes Schaltnetzteil nach Anspruch 1 oder 2, **dadurch gekennzeichnet,** daß der Kollektor (44) des npn-Transistors (36) als Betätigungseingang des Strombegrenzungsschalters (32) vorgesehen ist.

5. Primärgetaktetes Schaltnetzteil nach Anspruch 1, **dadurch gekennzeichnet,** daß als primäre Regler (28, 30) Oktokoppler vorgesehen sind.

6. Primärgetaktetes Schaltnetzteil nach Anspruch 1 oder 5, **dadurch gekennzeichnet,** daß die primären Regler (28, 30) mit einem Tasteingang (36) der Steuereinheit (4) verbunden sind.

7. Primärgetaktetes Schaltnetzteil nach Anspruch 1 oder 5, **dadurch gekennzeichnet,** daß die primären Regler (28, 30) mittels einer Entkopplungsdiode (31) miteinander verbunden sind.

## Claims

1. Primary switched-mode power supply having an auxiliary voltage supply (2) on the primary side for a control unit (4) of a primary circuit breaker (20) which is subsequently connected to the primary winding, having a primary-side voltage regulator (28) and having a further primary regulator (30), the auxiliary voltage supply (2) containing a following winding (6), to which there is connected electrically in parallel a series circuit consisting of a diode (8) and a capacitor (10), characterised in that there is connected between the auxiliary voltage input (14) of the control unit (4) and the earth potential a current limiting switch (32), the actuating input of which is connected with an output of the primary regulator (30).

2. Primary switched-mode power supply according to claim 1, characterised in that a pnp and an npn transistor (34, 36) are provided as a current-limiting switch (32), the collector (38, 44) of each transistor being connected by way of a collector resistor (40, 46) with the base (42, 48) of the other transistor (36, 32) respectively and a base-emitter-resistor (50) being provided in each case.

3. Primary switched-mode power supply according to claim 1 or 2, characterised in that the auxiliary voltage input (14) of the control unit (4) is connected with the emitter (54) of the pnp transistor (34) and the earth potential is connected with the emitter (52) of the npn transistor (36).

4. Primary switched-mode power supply according to claim 1 or 2, characterised in that the collector (44) of the npn transistor (36) is provided as an actuating input of the current-limiting switch (32).

5. Primary switched-mode power supply according to claim 1, characterised in that optocouplers are provided as primary regulators (28, 30).

6. Primary switched-mode power supply according to claim 1 or 5, characterised in that the primary regulators (28, 30) are connected with a keying input (36) of the control unit (4).

7. Primary switched-mode power supply according to claim 1 or 5, characterised in that the primary regulators (28, 30) are connected with each other by means of a decoupling diode (31).

## Revendications

1. Bloc d'alimentation réseau commuté, commandé de façon cadencée au primaire, comportant un dispositif (2) d'alimentation en tension auxiliaire, situé sur le côté primaire, pour une unité de commande (4) d'un sectionneur de puissance (20) situé sur le côté primaire et branché en série en aval avec l'enroulement primaire, un régulateur de tension (28) situé au primaire et un autre régulateur (30) situé au primaire, le dispositif (2) d'alimentation en tension auxiliaire contenant un enroulement connecté (6), en parallèle, avec lequel est branché électriquement un circuit série formé d'une diode (8) et d'un condensateur (10), caractérisé par le fait qu'un interrupteur (32) de limitation du courant est branché entre l'entrée de tension auxiliaire (14) de l'unité de commande (4) et le potentiel de masse et que son entrée d'actionnement est reliée à une sortie du régulateur (30) situé au primaire.

2. Bloc d'alimentation réseau commuté, commandé de façon cadencée au primaire, suivant la revendication 1, caractérisé en ce qu'il est prévu, comme interrupteur (32) de limitation du courant, un transistor pnp et un transistor npn (34, 36), dont les collecteurs (38, 44) sont reliés chacun par l'intermédiaire d'une résistance (40, 46) à la base (42, 48) de l'autre transistor respectif (36, 32) et qu'il est prévu des résistances base-émetteur respectives (50).

3. Bloc d'alimentation réseau commuté, commandé de façon cadencée au primaire, suivant la revendication 1, caractérisé par le fait que l'entrée de tension auxiliaire (14) de l'unité de commande (4) est reliée à l'émetteur (54) du transistor pnp (34) et que le potentiel de masse est relié à l'émetteur (52) du transistor npn (36).

4. Bloc d'alimentation réseau commuté, commandé de façon cadencée au primaire, suivant la revendication 1 ou 2, caractérisé par le fait que le collecteur (44) du transistor npn (36) est prévu en tant qu'entrée d'actionnement de l'interrupteur (32) de limitation du courant.

5. Bloc d'alimentation réseau commuté, commandé de façon cadencée, suivant la revendication 1, caractérisé en ce que des optocoupleurs sont prévus en tant que régulateurs (28, 30) situés au primaire.

6. Bloc d'alimentation réseau commuté, commandé de façon cadencée au primaire, suivant la revendication 1 ou 5, caractérisé par le fait que les régulateurs (28, 30) situés au primaire sont reliés à une entrée de manœuvre (36) de l'unité de commande (4).

7. Bloc d'alimentation réseau commuté, commandé de façon cadencée au primaire, suivant la revendication 1 ou 5, caractérisé par le fait que les régulateurs (28, 30) situés au primaire sont reliés entre eux au moyens d'une diode de découplage (31).